# EUROPÄISCHE PATENTANMELDUNG

(11) **EP 4 249 411 A1**
(43) Veröffentlichungstag der Anmeldung: **27.09.2023**
(21) Anmeldenummer: 23164079.8
(22) Anmeldetag: 24.03.2023
(51) Int. Cl.: B65G 47/52, B65G 47/57

(54) **HANDHABUNGSVORRICHTUNG ZU EINER ÜBERGABE VON PRODUKTEN, PRODUKTIONSMASCHINE MIT EINER ENTSPRECHENDEN HANDHABUNGSVORRICHTUNG SOWIE VERFAHREN ZU EINER ÜBERGABE VON PRODUKTEN**

(30) Priorität: 25.03.2022 DE 102022107117
(71) Anmelder: Syntegon Packaging Technology GmbH, 73630 Remshalden (DE)
(72) Erfinder: Glück, Raphael, 73663 Berglen (DE); Schwarz, Sebastian, 91616 Neusitz (DE); Kuhn, Roland, 73660 Urbach (DE); Wied, Manuel, 71404 Korb (DE)
(74) Vertreter: Daub, Thomas

(57) **Zusammenfassung**

Die Erfindung geht aus von einer Handhabungsvorrichtung zu einer Übergabe von Produkten (12a; 12d; 12e; 12f), insbesondere von Lebensmitteln, mit zumindest einer Transporteinheit (14a; 14b; 14d; 14e; 14f), insbesondere einer Förderbandeinheit, mit zumindest einer elektrodynamischen Fördereinheit (16a; 16b; 16c; 16d; 16e; 16f), die zumindest einen elektrodynamisch beweglichen Mover (18a; 18b; 18c; 18d; 18e; 18f) und zumindest eine am Mover (18a; 18b; 18c; 18d; 18e; 18f) angeordnete Produktaufnahmeeinheit (20a; 20b; 20c; 20d; 20e; 20f) umfasst, die zumindest eine quer zu einer Auflagefläche (22a; 22b; 22c; 22d; 22e; 22f) der Produktaufnahmeeinheit (20a; 20b; 20c; 20d; 20e; 20f) verlaufende Seitenwand (24a, 26a, 28a; 24b, 26b, 28b; 24c, 26c, 28c; 24d, 26d, 28d; 24e, 26e, 28e; 24f, 26f, 28f), die zumindest teilweise einen Produktaufnahmeraum (30a; 30b; 30c; 30d; 30e; 30f) der Produktaufnahmeeinheit (20a; 20b; 20c; 20d; 20e; 20f) begrenzt, aufweist, und mit zumindest einer Transfereinheit (32a; 32b; 32c; 32d; 32e; 32f) zu einem Produkttransfer von Produkten (12a; 12d; 12e; 12f) zwischen der Transporteinheit (14a; 14b; 14d; 14e; 14f) und dem Mover (18a; 18b; 18c; 18d; 18e; 18f).

Es wird vorgeschlagen, dass die Produktaufnahmeeinheit (20a; 20b; 20c; 20d; 20e; 20f), betrachtet in einer zumindest im Wesentlichen senkrecht zu einer Haupterstreckungsebene der Produktaufnahmeeinheit (20a; 20b; 20c; 20d; 20e; 20f) verlaufenden Ebene, zumindest eine zumindest teilweise offene Stirnseite (34a; 34b; 34c; 34d; 34e; 34f) aufweist.

## Beschreibung

### Stand der Technik

Die Erfindung betrifft eine Handhabungsvorrichtung zu einer Übergabe von Produkten, mit zumindest einer Transporteinheit, mit zumindest einer elektrodynamischen Fördereinheit, die zumindest einen elektrodynamisch beweglichen Mover und zumindest eine am Mover angeordnete Produktaufnahmeeinheit umfasst, die zumindest eine quer zu einer Auflagefläche der Produktaufnahmeeinheit verlaufende Seitenwand, die zumindest teilweise einen Produktaufnahmeraum der Produktaufnahmeeinheit begrenzt, aufweist, und mit zumindest einer Transfereinheit zu einem Produkttransfer von Produkten zwischen der Transporteinheit und dem Mover.

Von dem Unternehmen Planar Motor Inc. ist bereits eine Handhabungsvorrichtung zu einer Übergabe von Produkten bekannt, die zumindest eine Transporteinheit und eine elektrodynamische Fördereinheit umfasst, wobei die Fördereinheit zumindest einen elektrodynamisch beweglichen Mover und zumindest eine am Mover angeordnete Produktaufnahmeeinheit aufweist, wobei die Produktaufnahmeeinheit zumindest eine quer zu einer Auflagefläche der Produktaufnahmeeinheit verlaufende Seitenwand, die zumindest teilweise einen Produktaufnahmeraum der Produktaufnahmeeinheit begrenzt, aufweist. Ferner umfasst die bereits bekannte Handhabungsvorrichtung des Unternehmens Planar Motor Inc. eine Transfereinheit zu einem Produkttransfer von Produkten zwischen der Transporteinheit und dem Mover. Die Transfereinheit umfasst zu einem Transport von Produkten zu dem Mover eine Rampe und zu einem Transport von dem Mover zu einem nachgelagerten Transportband oder einer Pufferstation einen Greifer.

Die Aufgabe der Erfindung besteht insbesondere darin, eine gattungsgemäße Vorrichtung und ein gattungsgemäßes Verfahren mit verbesserten Eigenschaften hinsichtlich einer Flexibilität innerhalb eines Transportprozesses bereitzustellen. Die Aufgabe wird erfindungsgemäß durch die Merkmale des Anspruchs 1 bzw. des Anspruchs 9 gelöst, während vorteilhafte Ausgestaltungen und Weiterbildungen der Erfindung den Unteransprüchen entnommen werden können.

### Offenbarung der Erfindung

Die Erfindung geht aus von einer Handhabungsvorrichtung zu einer Übergabe von Produkten, insbesondere von Lebensmitteln, mit zumindest einer Transporteinheit, insbesondere einer Förderbandeinheit, mit zumindest einer elektrodynamischen Fördereinheit, die zumindest einen elektrodynamisch beweglichen Mover und zumindest eine am Mover angeordnete Produktaufnahmeeinheit umfasst, die zumindest eine quer zu einer Auflagefläche der Produktaufnahmeeinheit verlaufende Seitenwand, die zumindest teilweise einen Produktaufnahmeraum der Produktaufnahmeeinheit begrenzt, aufweist, und mit zumindest einer Transfereinheit zu einem Produkttransfer von Produkten zwischen der Transporteinheit und dem Mover.

Es wird vorgeschlagen, dass die Produktaufnahmeeinheit, betrachtet in einer zumindest im Wesentlichen senkrecht zu einer Haupterstreckungsebene der Produktaufnahmeeinheit verlaufenden Ebene, zumindest eine zumindest teilweise offene Stirnseite aufweist. Mittels der erfindungsgemäßen Ausgestaltung kann vorteilhaft eine sichere Anordnung eines Produkts in der Produktaufnahmeeinheit bei gleichzeitig einfacher Entnahmemöglichkeit des Produkts aus der Produktaufnahmeeinheit realisiert werden. Es kann vorteilhaft durch eine Bewegung des Movers alleine, insbesondere infolge eines zumindest teilweise Darunterdurchfahrens unter einem rampenförmigen Transferelement durch den Mover oder infolge eines Bremsvorgangs des Movers, eine Entnahme eines Produkts aus der Produktaufnahmeeinheit realisiert werden. Es kann vorteilhaft, insbesondere in zumindest einem Ausführungsbeispiel der Handhabungsvorrichtung, eine konstruktiv einfache Entnahme eines Produkts aus der Produktaufnahmeeinheit mit einer antriebslosen Transfereinheit realisiert werden, insbesondere mit einem rampenförmigen Transferelement. Es kann vorteilhaft, insbesondere in zumindest einem Ausführungsbeispiel der Handhabungsvorrichtung, eine Entnahme eines Produkts infolge einer Verzögerung des Movers erfolgen, so dass vorteilhaft zusätzliche Entnahmevorrichtungen, wie beispielsweise Entnahmegreifer o. dgl., eingespart werden können.

Die Stirnseite der Produktaufnahmeeinheit kann insbesondere dadurch zumindest teilweise offen ausgestaltet sein, dass die Produktaufnahmeeinheit an der Stirnseite einen Durchbruch in einer Seitenwand aufweist, dass die Produktaufnahmeeinheit an der Stirnseite frei von einer Seitenwand ausgebildet ist, dass die Produktaufnahmeeinheit an der Stirnseite eine beweglich gelagerte Seitenwand aufweist, die insbesondere infolge der beweglichen Lagerung öffenbar und schließbar ist, oder durch andere, einem Fachmann als sinnvoll erscheinende Ausgestaltungen der Produktaufnahmeeinheit. Die Haupterstreckungsebene der Produktaufnahmeeinheit verläuft vorzugsweise zumindest im Wesentlichen parallel zur Auflagefläche der Produktaufnahmeeinheit. Die Haupterstreckungsebene der Produktaufnahmeeinheit verläuft bevorzugt zumindest im Wesentlichen parallel zu einer Hauptbewegungsebene des Movers, in der sich Bewegungsachsen des Movers, entlang derer und/oder um die sich der Mover relativ zu den Bewegungsflächenelementen bewegen kann, erstrecken. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Bevorzugt ist die Transporteinheit zu einem Transport von Produkten vorgesehen. Vorzugsweise ist die Transporteinheit zu einer Zuführung von Produkten zur Transfereinheit und/oder zu einem Abtransport von Produkten von der Transfereinheit vorgesehen. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise umfasst die Transporteinheit zumindest ein Zuführtransportelement, insbesondere ein Zuführtransportband, zu einer Zuführung von Produkten zur Transfereinheit und zumindest ein Abtransportelement, insbesondere ein Abtransportband. Vorzugsweise bildet das Zuführtransportelement einen Transportabschnitt der Transporteinheit. Bevorzugt bildet das Abtransportelement einen weiteren Transportabschnitt der Transporteinheit. Bevorzugt ist die elektrodynamische Fördereinheit und die Transfereinheit, betrachtet entlang einer Haupttransportrichtung der Transporteinheit, zwischen zumindest zwei Transportabschnitten der Transporteinheit angeordnet. Insbesondere ist die elektrodynamische Fördereinheit und die Transfereinheit, betrachtet entlang der Haupttransportrichtung der Transporteinheit, zwischen dem Zuführtransportelement und dem Abtransportelement angeordnet. Es ist jedoch auch denkbar, dass die elektrodynamische Fördereinheit und die Transfereinheit an einer anderen, einem Fachmann als sinnvoll erscheinenden Position relativ zu den Transportabschnitten angeordnet sind.

Die Transfereinheit ist vorzugsweise zu einem Transfer von Produkten von der Transporteinheit, insbesondere von dem Zuführtransportelement, zum Mover und/oder zu einem Transfer von Produkten von dem Mover zur Transporteinheit, insbesondere zum Abtransportelement, vorgesehen. Die Transfereinheit kann zumindest teilweise oder vollständig von physischen Elementen gebildet sein, wie beispielsweise von einer oder mehreren Produktrutsche/n, von einer oder mehreren Produktrampe/n, von einem Produkttransportband oder von mehreren Produkttransportbändern, von einer oder mehreren Produkttransportkette/n o. dgl. Alternativ oder zusätzlich kann die Transfereinheit zumindest teilweise oder vollständig von einer Software gebildet sein, die zu einer Steuerung oder Regelung einer Bewegung des Movers vorgesehen ist, wie beispielsweise zu einer Steuerung oder Regelung einer Verzögerung des Movers, insbesondere um eine trägheitsbedingte Übergabe des Produkts von dem Mover zum Abtransportelement zu realisieren.

Die elektrodynamische Fördereinheit weist vorzugsweise eine, einem Fachmann bereits bekannte Ausgestaltung auf. Die elektrodynamische Fördereinheit umfasst bevorzugt eine Vielzahl, insbesondere horizontal ausgerichteter, Bewegungsflächenelemente, die mit elektromagnetischen Antriebselementen ausgestattet sind und miteinander verbunden sind, insbesondere um zusammen eine planare Bewegungsebene zu bilden. Die elektrodynamische Fördereinheit umfasst vorzugsweise eine Vielzahl an Movern, die relativ zu den Bewegungsflächenelementen, insbesondere kontaktlos, beweglich sind, insbesondere infolge eines Zusammenwirkens von Permanentmagneten der Mover mit den elektromagnetischen Antriebselementen der Bewegungsflächenelemente. Insbesondere kann die elektrodynamische Fördereinheit auf eine, einem Fachmann bereits bekannte Art und Weise eine Position der einzelnen Mover relativ zu den Bewegungsflächenelementen erfassen und auswerten, um eine Steuerung oder Regelung einer Bewegung der Mover zu realisieren. Hinsichtlich einer grundsätzlichen Funktionsweise und einer grundsätzlichen Ausgestaltung der elektrodynamischen Fördereinheit der erfindungsgemäßen Handhabungsvorrichtung wird beispielsweise auf das Produkt XPlanar der Firma Beckhoff Automation GmbH & Co. KG oder auf das Produkt XBot^{®} der Firma Planar Motor Inc. verwiesen. Mittels des Movers oder mittels den Movern der elektrodynamischen Fördereinheit können Produkte besonders flexibel gehandhabt werden. Zu einer Handhabung von Produkten ist vorzugsweise an jedem Mover zumindest eine Produktaufnahmeeinheit angeordnet.

Die Produktaufnahmeeinheit ist vorzugsweise als eine Art Aufnahmeschale ausgebildet, in der Produkte während eines Handhabens mittels des Movers angeordnet sind. Die Produktaufnahmeeinheit kann einteilig mit dem, insbesondere jeweiligen, Mover ausgebildet sein oder die Produktaufnahmeeinheit kann mittels einer form- und/oder kraftschlüssigen Verbindung an dem, insbesondere jeweiligen, Mover fixiert sein. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise umfasst die Produktaufnahmeeinheit die zumindest eine quer, insbesondere zumindest im Wesentlichen senkrecht, zur Auflagefläche der Produktaufnahmeeinheit verlaufende Seitenwand, die zumindest teilweise den Produktaufnahmeraum der Produktaufnahmeeinheit begrenzt. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Die, insbesondere in zumindest einem Zustand, zumindest teilweise offene Stirnseite der Produktaufnahmeeinheit kann vorzugsweise durch zumindest eine durch zumindest zwei Teilabschnitte einer Seitenwand begrenzte Öffnung der an der Stirnseite angeordneten Seitenwand gebildet sein, durch ein Nichtvorhandensein einer Seitenwand an der Stirnseite, durch eine beweglich an der Stirnseite gelagerte Seitenwand oder durch andere, einem Fachmann als sinnvoll erscheinende Ausgestaltungen der Produktaufnahmeeinheit gebildet sein. Bevorzugt umfasst die Produktaufnahmeeinheit zumindest zwei, insbesondere zumindest im Wesentlichen parallel zueinander verlaufende, Seitenwände, die quer zur Auflagefläche verlaufen und zumindest teilweise den Produktaufnahmeraum der Produktaufnahmeeinheit begrenzen. In zumindest einem Ausführungsbeispiel der Handhabungsvorrichtung umfasst die Produktaufnahmeeinheit zumindest drei Seitenwände, die quer, insbesondere zumindest im Wesentlichen senkrecht, zur Auflagefläche der Produktaufnahmeeinheit verlaufen, wobei zwei der drei Seitenwände zumindest im Wesentlichen parallel zueinander ausgerichtet sind und eine der drei Seitenwände quer, insbesondere zumindest im Wesentlichen senkrecht, zu den zwei der drei Seitenwände ausgerichtet ist. Die drei Seitenwände bilden, betrachtet in einer zumindest im Wesentlichen senkrecht zur Auflagefläche und/oder zur Haupterstreckungsebene verlaufenden Draufsicht, vorzugsweise eine U-förmige Umrandung des Produktaufnahmeraums. Denkbar ist auch, dass die eine der drei Seitenwände, die quer, insbesondere zumindest im Wesentlichen senkrecht, zu den zwei der drei Seitenwände ausgerichtet ist, in zwei Teilabschnitte unterteilt ist, so dass die Seitenwände, betrachtet in einer zumindest im Wesentlichen senkrecht zur Auflagefläche und/oder zur Haupterstreckungsebene verlaufenden Draufsicht, zwei L-förmige Umrandungen des Produktaufnahmeraums ergeben. Zudem ist auch denkbar, dass die Produktaufnahmeeinheit vier Seitenwände umfasst, die quer zur Auflagefläche verlaufen und zumindest teilweise den Produktaufnahmeraum der Produktaufnahmeeinheit begrenzen, wobei zumindest eine der vier Seitwände zumindest teilweise oder vollständig beweglich ist, um die Stirnseite in zumindest einem Zustand zumindest teilweise zu öffnen. Es ist denkbar, dass mehr als eine der Seitenwände bewegbar ist, um mehr als eine Stirnseite der Produktaufnahmeeinheit zumindest teilweise zu öffnen. Die bewegliche Seitenwand oder die beweglichen Seitenwände können schwenkbar oder linear beweglich am Mover gelagert sein. Die bewegliche/n Seitenwand/Seitenwände kann/können aktiv oder passiv beweglich sein, wie beispielsweise mittels eines am Mover angeordneten Aktors, mittels einer Kulisse, an dem der Mover zu einem Bewegen der Seitenwand/Seitenwände vorbeifährt, um die Seitenwand/Seitenwände zu öffnen oder zu schließen oder mittels einer anderen, einem Fachmann als sinnvoll erscheinenden Ausgestaltung aktiv oder passiv beweglich sein.

Des Weiteren wird vorgeschlagen, dass die Produktaufnahmeeinheit zumindest einen Boden aufweist, der zumindest eine schlitzartige oder nutartige Aussparung aufweist, die zu einer Einführung zumindest eines Transferelements der Transfereinheit oder zu einem Beeinflussen einer Reibung zwischen einem in der Produktaufnahmeeinheit angeordneten Produkt und dem Boden, insbesondere der Auflagefläche, der Produktaufnahmeeinheit vorgesehen ist. Vorzugsweise ist der Boden einteilig mit der Seitenwand/den Seitenwänden der Produktaufnahmeeinheit ausgebildet. Es ist jedoch auch denkbar, dass die Seitenwand/Seitenwände mittels einer form- und/oder kraftschlüssigen Verbindung an dem Boden fixiert ist/sind, wie beispielsweise mittels einer Steckverbindung, einer Rastverbindung, einer Nut-und-Feder-Verbindung o. dgl. Der Boden erstreckt sich vorzugsweise quer, insbesondere zumindest im Wesentlichen senkrecht, zur Seitenwand/zu den Seitenwänden. Bevorzugt bildet der Boden, insbesondere zumindest teilweise, die Auflagefläche. In zumindest einem Ausführungsbeispiel der Handhabungsvorrichtung umfasst der Boden eine, insbesondere einzelne, schlitzartige oder nutartige Aussparung, die zu einer Einführung des zumindest einen Transferelements der Transfereinheit vorgesehen ist, wobei eine Aussparungsbodenfläche, insbesondere ein Nutgrund, der Aussparung, insbesondere entlang einer zumindest im Wesentlichen senkrecht zur Auflagefläche verlaufenden Richtung, parallel versetzt zur Auflagefläche angeordnet ist. Vorzugsweise wird die schlitzartige oder nutartige Aussparung, insbesondere in zumindest einem Ausführungsbeispiel der Handhabungsvorrichtung, seitlich von jeweils zumindest einer Teilfläche der Auflagefläche begrenzt. Die schlitzartige oder nutartige Aussparung ist, insbesondere in zumindest einem Ausführungsbeispiel der Handhabungsvorrichtung, entlang einer Mittelachse der Produktaufnahmeeinheit angeordnet. In zumindest einem Ausführungsbeispiel der Handhabungsvorrichtung umfasst der Boden eine Vielzahl an schlitzartigen oder nutartigen Aussparungen, die zu einem Beeinflussen einer Reibung zwischen einem in der Produktaufnahmeeinheit angeordneten Produkt und dem Boden der Produktaufnahmeeinheit vorgesehen ist. Vorzugsweise verlaufen die schlitzartigen oder nutartigen Aussparungen alle zumindest im Wesentlichen parallel zueinander und insbesondere alle zumindest im Wesentlichen senkrecht zu der zumindest teilweise offenen Stirnseite. Die schlitzartigen oder nutartigen Aussparungen bilden vorzugsweise Längsrillen im Boden der Produktaufnahmeeinheit. Bevorzugt sind die schlitzartigen oder nutartigen Aussparungen durch Stege voneinander getrennt, wobei Oberseiten der Stege die Auflagefläche der Produktaufnahmeeinheit bilden. Zudem ist denkbar, dass die Auflagefläche der Produktaufnahmeeinheit zu einem Beeinflussen einer Reibung zwischen einem in der Produktaufnahmeeinheit angeordneten Produkt und dem Boden mit einer Antihaftbeschichtung, wie beispielsweise einer Beschichtung aus Polytetrafluorethylen (PTFE), aus Keramik, aus Diamond-like-Carbon-Schicht (DLC-Schicht) o. dgl., versehen ist oder dass der Boden, insbesondere die Auflagefläche, aus einem Antihaftmaterial, wie beispielsweise aus Polytetrafluorethylen (PTFE), aus Keramik o. dgl., gebildet ist. Mittels der erfindungsgemäßen Ausgestaltung kann konstruktiv einfach eine Entnahme von Produkten aus dem Produktaufnahmeraum umgesetzt werden. Es kann vorteilhaft durch eine Bewegung des Movers alleine, insbesondere infolge eines zumindest teilweise Darunterdurchfahrens unter einem rampenförmigen Transferelement durch den Mover oder infolge eines Bremsvorgangs des Movers, eine Entnahme eines Produkts aus der Produktaufnahmeeinheit realisiert werden.

Ferner wird vorgeschlagen, dass die Produktaufnahmeeinheit zumindest einen, insbesondere den bereits zuvor genannten, Boden aufweist, der zumindest eine, insbesondere die bereits zuvor genannte, schlitzartige oder nutartige Aussparung aufweist, die sich ausgehend von der zumindest teilweise offenen Stirnseite zumindest zum Großteil über die gesamte Längserstreckung der Produktaufnahmeeinheit erstreckt. Unter "zumindest zum Großteil" soll insbesondere mehr als 50 %, bevorzugt mehr als 70 % und ganz besonders bevorzugt mehr als 90 % einer maximalen Gesamterstreckung entlang einer Richtung, einer maximalen Gesamtmasse oder einer anderen messbaren maximalen Größe eines Bezugselements oder einer Bezugseinheit verstanden werden. Bevorzugt erstreckt sich die schlitzartige oder nutartige Aussparung zu einer Einführung zumindest eines Transferelements der Transfereinheit vollständig über die gesamte Längserstreckung der Produktaufnahmeeinheit. Vorzugsweise erstrecken sich die schlitzartigen oder nutartigen Aussparungen zu einem Beeinflussen einer Reibung zwischen einem in der Produktaufnahmeeinheit angeordneten Produkt und dem Boden der Produktaufnahmeeinheit ausgehend von der zumindest teilweise offenen Stirnseite, insbesondere geradlinig, bis hin zu der einen Seitenwand der drei Seitenwände, die den Produktaufnahmeraum an einer der zumindest teilweise offenen Stirnseite abgewandten Seite der Produktaufnahmeeinheit begrenzt. Mittels der erfindungsgemäßen Ausgestaltung kann besonders konstruktiv einfach eine Entnahme von Produkten aus dem Produktaufnahmeraum umgesetzt werden. Es kann besonders vorteilhaft durch eine Bewegung des Movers alleine, insbesondere infolge eines zumindest teilweise Darunterdurchfahrens unter einem rampenförmigen Transferelement durch den Mover ein vollständiges Hindurchführen des Transferelements realisiert werden. Es kann besonders vorteilhaft infolge eines Bremsvorgangs des Movers, eine Entnahme eines Produkts aus der Produktaufnahmeeinheit realisiert werden, insbesondere durch ein trägheitsbedingtes Herausgleiten des Produkts aus dem Produktaufnahmeraum durch den Bremsvorgang und die geringe Reibungsfläche zwischen dem Produkt und dem Boden realisiert werden.

Des Weiteren wird, insbesondere in zumindest einem Ausführungsbeispiel der Handhabungsvorrichtung, vorgeschlagen, dass die Produktaufnahmeeinheit zumindest ein Rampenelement aufweist, das dazu vorgesehen ist, Produkte geneigt im Produktaufnahmeraum anzuordnen. Das Rampenelement bildet vorzugsweise zumindest einen Teil der Auflagefläche der Produktaufnahmeeinheit. Vorzugsweise bildet das Rampenelement in Bezug auf den Boden eine schiefe Ebene. Vorzugsweise ist das Rampenelement relativ zum Boden geneigt ausgerichtet. Bevorzugt ist das Rampenelement lediglich in einem Teilbereich des Produktaufnahmeraums angeordnet. Das Rampenelement ist insbesondere direkt angrenzend an zumindest eine der Seitenwände angeordnet. Es ist denkbar, dass das Rampenelement zumindest teilweise eine der Seitenwände bildet, einteilig mit einer der Seitenwände ausgebildet ist oder mittels einer form- und/oder kraftschlüssigen Verbindung am Boden fixiert ist. Weitere einem Fachmann als sinnvoll erscheinende Ausgestaltungen oder Anordnungen des Rampenelements sind ebenfalls denkbar. Die Produktaufnahmeeinheit umfasst vorzugsweise zumindest zwei Rampenelemente. Die zumindest zwei Rampenelemente sind vorzugsweise spiegelsymmetrisch zu einer Längsachse der Produktaufnahmeeinheit im Produktaufnahmeraum angeordnet. Es ist zudem auch denkbar, dass die zumindest zwei Rampenelemente eine andere, einem Fachmann als sinnvoll erscheinende Anordnung im Produktaufnahmeraum aufweisen. Vorzugsweise weisen die zumindest zwei Rampenelemente eine zumindest im Wesentlichen analoge Ausgestaltung auf. Die Rampenelemente können mit einer Antihaftbeschichtung versehen sein oder andere, einem Fachmann als sinnvoll erscheinende Oberflächenausgestaltungen aufweisen, die zu einem Beeinflussen einer Reibung zwischen einem an den Rampenelementen anliegenden Produkt und der Oberfläche der Rampenelemente vorgesehen sind. Mittels der erfindungsgemä-ßen Ausgestaltung kann konstruktiv einfach ein Schiefstellen von Produkten im Produktaufnahmeraum realisiert werden, insbesondere um eine Entnahme infolge eines Zusammenwirkens der Produkte mit einem Transferelement, das unter das im Produktaufnahmeraum befindliche Produkt bewegt werden kann, zu ermöglichen. Es kann besonders konstruktiv einfach eine Entnahme von Produkten aus dem Produktaufnahmeraum umgesetzt werden. Es kann besonders vorteilhaft durch eine Bewegung des Movers alleine, insbesondere infolge eines zumindest teilweise Darunterdurchfahrens unter einem rampenförmigen Transferelement durch den Mover ein vollständiges Hindurchführen des Transferelements realisiert werden.

Weiterhin wird, insbesondere in zumindest einem Ausführungsbeispiel der Handhabungsvorrichtung, vorgeschlagen, dass die Produktaufnahmeeinheit zumindest einen, insbesondere den bereits zuvor genannten, Boden, der zumindest eine, insbesondere die bereits zuvor genannte, schlitzartige oder nutartige Aussparung aufweist, und zumindest ein, insbesondere das bereits zuvor genannte, Rampenelement umfasst, das seitlich versetzt zur Aussparung angeordnet ist. Vorzugsweise sind die zwei Rampenelemente seitlich versetzt zur Aussparung angeordnet. Insbesondere ist je eines der Rampenelemente an einer Seite der Aussparung angeordnet. Vorzugsweise ist eines der Rampenelemente linksseitig versetzt zur Aussparung angeordnet und das andere der Rampenelemente ist rechtsseitig versetzt zur Aussparung angeordnet. Die Aussparung ist vorzugsweise zwischen den zwei Rampenelementen angeordnet, insbesondere betrachtet entlang einer zumindest im Wesentlichen senkrecht zur Längsachse der Produktaufnahmeeinheit verlaufenden Richtung. Mittels der erfindungsgemäßen Ausgestaltung kann konstruktiv einfach ein Schiefstellen von Produkten im Produktaufnahmeraum und zugleich eine Einführmöglichkeit für ein Transferelement, das unter das im Produktaufnahmeraum befindliche Produkt bewegt werden kann, realisiert werden. Es kann besonders konstruktiv einfach eine Entnahme von Produkten aus dem Produktaufnahmeraum umgesetzt werden. Es kann besonders vorteilhaft durch eine Bewegung des Movers alleine, insbesondere infolge eines zumindest teilweise Darunterdurchfahrens unter einem rampenförmigen Transferelement durch den Mover ein vollständiges Hindurchführen des Transferelements realisiert werden.

Des Weiteren wird, insbesondere in zumindest einem Ausführungsbeispiel der Handhabungsvorrichtung, vorgeschlagen, dass die Handhabungsvorrichtung zumindest eine Steuer- oder Regeleinheit umfasst, die zumindest teilweise einstückig mit der Transfereinheit ausgebildet ist und die dazu eingerichtet ist, eine Beschleunigungskenngröße des Movers derart zu steuern oder zu regeln, dass ein Produkttransfer von Produkten zwischen der Transporteinheit und dem Mover in Abhängigkeit von einer Änderung der Beschleunigungskenngröße durchführbar ist. Darunter, dass "Einheiten zumindest teilweise einstückig ausgebildet sind" soll insbesondere verstanden werden, dass die Einheiten zumindest ein gemeinsam genutztes Element, insbesondere ein gemeinsam genutztes Rechenelement oder ein gemeinsam genutztes Speicherelement, aufweisen. Vorzugsweise ist die Steuer- oder Regeleinheit in einem Ausführungsbeispiel der Handhabungsvorrichtung, in dem die Transfereinheit zumindest teilweise oder vollständig von einer Software gebildet ist, zumindest teilweise einstückig mit der Transfereinheit ausgebildet. Bevorzugt ist die Steuer- oder Regeleinheit dazu eingerichtet, eine Verzögerung des Movers derart zu steuern oder zu regeln, dass ein Produkttransfer von dem Mover an die Transporteinheit, insbesondere an das Abtransportelement, in Abhängigkeit von der Verzögerung des Movers durchführbar ist. Insbesondere ist das Produkt infolge eines durch die Steuer- oder Regeleinheit hervorrufbaren Bremsvorgangs des Movers und einer trägheitsbedingten Weiterbewegung des Produkts relativ zum Mover durch die zumindest teilweise offene Stirnseite an die Transporteinheit, insbesondere an das Abtransportelement, übergebbar. Denkbar ist auch, dass die Steuer- oder Regeleinheit dazu eingerichtet ist, eine Beschleunigung des Movers derart zu steuern oder zu regeln, dass ein Produkttransfer von dem Mover an die Transporteinheit, insbesondere an das Abtransportelement, in Abhängigkeit von der Beschleunigung des Movers durchführbar ist, insbesondere bei einer Anordnung eines rampenartigen Transferelements der Transfereinheit vor der Transporteinheit, insbesondere vor dem Abtransportelement. Insbesondere ist das Produkt infolge einer durch die Steueroder Regeleinheit hervorrufbaren Beschleunigung des Movers bei einem Durchführen eines, insbesondere eigenantriebslosen, geneigten Transferelements durch die Aussparung der Produktaufnahmeeinheit auf dem geneigten Transferelement weiterbewegbar, bis es an das Abtransportelement übergeben ist. Weitere, einem Fachmann als sinnvoll erscheinende Ausgestaltungen oder Funktionsweisen der Steuerung oder Regelung einer Beschleunigungskenngröße des Movers zu einem Beeinflussen des Produkttransfers sind ebenfalls denkbar. Mittels der erfindungsgemäßen Ausgestaltung kann vorteilhaft durch eine Bewegung des Movers alleine, insbesondere infolge eines zumindest teilweise Darunterdurchfahrens unter einem rampenförmigen Transferelement durch den Mover oder infolge eines Bremsvorgangs des Movers, eine Entnahme eines Produkts aus der Produktaufnahmeeinheit realisiert werden.

Ferner wird eine Produktionsmaschine mit zumindest einer erfindungsgemäßen Handhabungsvorrichtung vorgeschlagen. Die Produktionsmaschine kann weitere, einem Fachmann als sinnvoll erscheinende Vorrichtungen und/oder Einheiten umfassen, die zu einer Handhabung von Produkten, insbesondere von Lebensmitteln, nutzbar sind. Die Produktionsmaschine ist vorzugsweise zu einer Herstellung, Abfüllung, Verpackung und/oder Umverpackung von Lebensmitteln vorgesehen. Die Produktionsmaschine kann somit zusätzlich zur Handhabungsvorrichtung eine Vielzahl an weiteren Vorrichtungen und/oder Einheiten aufweisen, die ein Fachmann für sinnvoll erachtet, wie beispielsweise eine Umformvorrichtung für Verpackungen, eine Schneidvorrichtung, eine Abfüllvorrichtung, eine Sterilisationsvorrichtung, eine Verschlussvorrichtung, eine Umverpackungsvorrichtung o. dgl. Mittels der erfindungsgemäßen Ausgestaltung kann vorteilhaft eine sichere Anordnung eines Produkts in der Produktaufnahmeeinheit bei gleichzeitig einfacher Entnahmemöglichkeit des Produkts aus der Produktaufnahmeeinheit realisiert werden. Es kann vorteilhaft eine hohe Flexibilität innerhalb eines Transportprozesses der Produktionsmaschine erreicht werden.

Zudem wird ein Mover mit einer daran angeordneten Produktaufnahmeeinheit für eine erfindungsgemäße Handhabungsvorrichtung vorgeschlagen. Mittels der erfindungsgemäßen Ausgestaltung kann vorteilhaft eine sichere Anordnung eines Produkts in der Produktaufnahmeeinheit bei gleichzeitig einfacher Entnahmemöglichkeit des Produkts aus der Produktaufnahmeeinheit realisiert werden. Es kann vorteilhaft eine kostengünstige Nachrüstung von bereits bestehenden Handhabungsvorrichtungen mit einem Mover der erfindungsgemäßen Handhabungsvorrichtung realisiert werden, wobei an dem Mover eine Produktaufnahmeeinheit der erfindungsgemäßen Handhabungsvorrichtung angeordnet ist.

Ferner geht die Erfindung aus von einem Verfahren zu einer Übergabe von Produkten, insbesondere von Lebensmitteln, mittels einer erfindungsgemäßen Handhabungsvorrichtung. Es wird vorgeschlagen, dass zu einem Produkttransfer von zumindest einem Produkt zwischen der Transporteinheit und dem Mover, das Produkt über die offene Stirnseite aus dem Produktaufnahmeraum herausgefördert wird. Mittels der erfindungsgemäßen Ausgestaltung kann vorteilhaft eine hohe Flexibilität in einem Transportprozess realisiert werden.

Es wird vorgeschlagen, dass ein Produkttransfer von zumindest einem Produkt zwischen der Transporteinheit und dem Mover in Abhängigkeit von einer Änderung einer Beschleunigungskenngröße, insbesondere in Abhängigkeit von einer Verzögerung, des Movers durchgeführt wird. Bevorzugt kann ein Produkttransfer von zumindest einem Produkt zwischen der Transporteinheit und dem Mover durch ein abruptes Abbremsen oder durch ein abruptes Erhöhen der Geschwindigkeit des Movers erfolgen. Mittels der erfindungsgemäßen Ausgestaltung kann vorteilhaft durch eine kostengünstige Softwarelösung ein einfacher Transfer erfolgen, insbesondere auch zu einer vorteilhaften Realisierung einer kostengünstigen Nachrüstlösung.

Des Weiteren wird vorgeschlagen, dass zumindest ein, insbesondere das bereits zuvor genannte, Transferelement der Transfereinheit zu einem Produkttransfer von zumindest einem Produkt zwischen der Transporteinheit und dem Mover in eine, insbesondere die bereits zuvor genannte, schlitzartige oder nutartige Aussparung eines, insbesondere des bereits zuvor genannten, Bodens der Produktaufnahmeeinheit eingeführt wird. Mittels der erfindungsgemäßen Ausgestaltung kann vorteilhaft eine zusätzliche Führung des Movers während einem Produkttransfer realisiert werden.

Zudem wird vorgeschlagen, dass der Mover zu einem Produkttransfer von zumindest einem Produkt zwischen der Transporteinheit und dem Mover unter zumindest einem, insbesondere dem bereits zuvor genannten, Transferelement der Transfereinheit hindurchfährt. Mittels der erfindungsgemäßen Ausgestaltung kann vorteilhaft eine einfache Übergabe von Produkten realisiert werden, insbesondere bei einer zusätzlichen Schiefstellung von Produkten im Produktaufnahmeraum.

Die erfindungsgemäße Handhabungsvorrichtung, die erfindungsgemäße Produktionsmaschine, der erfindungsgemäße Mover und/oder das erfindungsgemäße Verfahren sollen/soll hierbei nicht auf die oben beschriebene Anwendung und Ausführungsform beschränkt sein. Insbesondere können/kann die erfindungsgemäße Handhabungsvorrichtung, die erfindungsgemäße Produktionsmaschine, der erfindungsgemäße Mover und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine erfindungsgemäße Produktionsmaschine mit zumindest einer erfindungsgemäßen Handhabungsvorrichtung in einer schematischen Darstellung,
- Fig. 2: eine Detailansicht eines erfindungsgemäßen Movers mit einer daran angeordneten Produktaufnahmeeinheit der erfindungsgemäßen Handhabungsvorrichtung in einer schematischen Darstellung,
- Fig. 3: eine erste alternative Ausgestaltung einer erfindungsgemäßen Handhabungsvorrichtung in einer schematischen Darstellung,
- Fig. 4: eine zweite alternative Ausgestaltung einer erfindungsgemäßen Handhabungsvorrichtung in einer schematischen Darstellung,
- Fig. 5: eine dritte alternative Ausgestaltung einer erfindungsgemäßen Handhabungsvorrichtung in einer schematischen Darstellung,
- Fig. 6: eine Detailansicht eines alternativen erfindungsgemäßen Movers mit einer daran angeordneten Produktaufnahmeeinheit der dritten alternativen Ausgestaltung der erfindungsgemäßen Handhabungsvorrichtung in einer schematischen Darstellung,
- Fig. 7: eine vierte alternative Ausgestaltung einer erfindungsgemäßen Handhabungsvorrichtung in einer schematischen Darstellung,
- Fig. 8: eine fünfte alternative Ausgestaltung einer erfindungsgemäßen Handhabungsvorrichtung in einer schematischen Darstellung und
- Fig. 9: einen schematischen Verfahrensablauf eines erfindungsgemäßen Verfahrens zu einer Übergabe von Produkten.

### Beschreibung der Ausführungsbeispiele

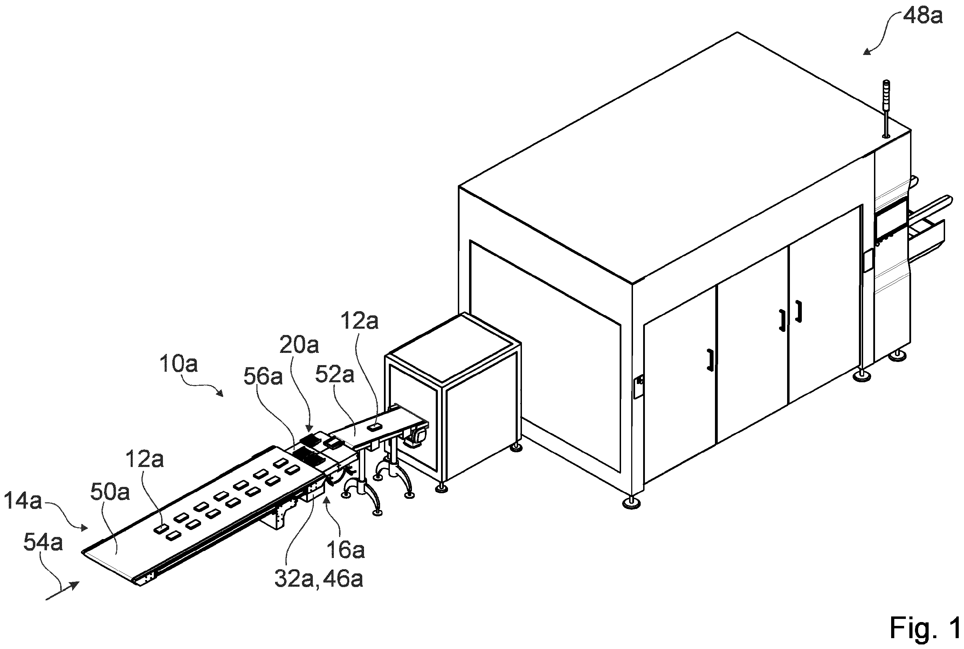

Figur 1 zeigt eine Produktionsmaschine 48a mit zumindest einer Handhabungsvorrichtung 10a. Die Produktionsmaschine 48a ist bevorzugt zu einer Herstellung und/oder zu einer Verarbeitung von Produkten 12a, insbesondere Lebensmitteln, vorgesehen. Die Produktionsmaschine 48a kann beispielsweise als eine Lebensmittelverpackungsmaschine, als eine Lebensmittelabfüllmaschine, als eine Lebensmittelherstellungsmaschine, als eine Kombination der zuvor genannten Maschinen o. dgl. ausgebildet sein. Die Produktionsmaschine 48a kann weitere, einem Fachmann als sinnvoll erscheinende Vorrichtungen und/oder Einheiten aufweisen, die zu einer Herstellung und/oder Verarbeitung von Produkten 12a, insbesondere Lebensmitteln, Verwendung finden, wie beispielsweise eine Sterilisationsvorrichtung, eine Abfüllvorrichtung, eine Verschlussvorrichtung, eine Umverpackungsvorrichtung o. dgl.

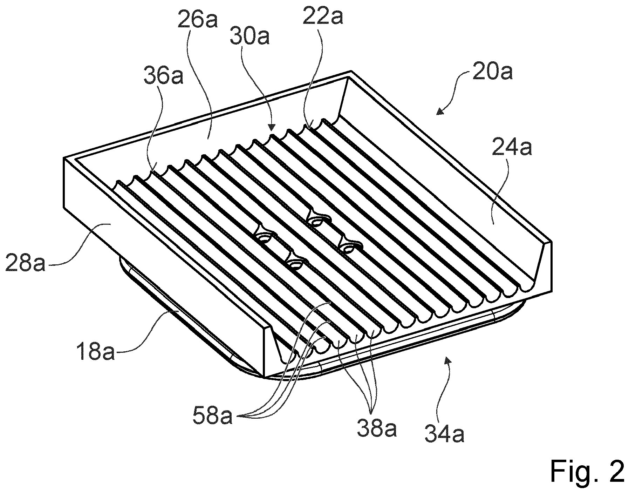

Die Handhabungsvorrichtung 10a ist zumindest zu einer Übergabe von Produkten 12a, insbesondere von Lebensmitteln, vorgesehen. Die Handhabungsvorrichtung 10a umfasst zumindest eine Transporteinheit 14a, insbesondere eine Förderbandeinheit, zumindest eine elektrodynamische Fördereinheit 16a, die zumindest einen elektrodynamisch beweglichen Mover 18a (vgl. Figur 2) und zumindest eine am Mover 18a angeordnete Produktaufnahmeeinheit 20a aufweist, und zumindest eine Transfereinheit 32a zu einem Produkttransfer von Produkten 12a zwischen der Transporteinheit 14a und dem Mover 18a. Vorzugsweise umfasst die elektrodynamische Fördereinheit 16a eine Vielzahl an Movern 18a, die auf eine, einem Fachmann bereits bekannte Art und Weise, insbesondere mit sechs Freiheitsgraden, auf Bewegungsflächenelementen 56a der elektrodynamischen Fördereinheit 16a bewegbar sind.

Bevorzugt ist die Transporteinheit 14a zu einem Transport von Produkten 12a, insbesondere von bereits verpackten Lebensmitteln, vorgesehen. Vorzugsweise ist die Transporteinheit 14a zu einer Zuführung von Produkten 12a zur Transfereinheit 32a und/oder zu einem Abtransport von Produkten 12a von der Transfereinheit 32a vorgesehen. Vorzugsweise umfasst die Transporteinheit 14a zumindest ein Zuführtransportelement 50a, insbesondere ein Zuführtransportband, zu einer Zuführung von Produkten 12a zur Transfereinheit 32a und zumindest ein Abtransportelement 52a, insbesondere ein Abtransportband. Vorzugsweise bildet das Zuführtransportelement 50a einen Transportabschnitt der Transporteinheit 14a. Bevorzugt bildet das Abtransportelement 52a einen weiteren Transportabschnitt der Transporteinheit 14a. Bevorzugt ist die elektrodynamische Fördereinheit 16a und die Transfereinheit 32a, betrachtet entlang einer Haupttransportrichtung 54a der Transporteinheit 14a, zwischen dem Transportabschnitt und dem weiteren Transportabschnitt der Transporteinheit 14a angeordnet. Insbesondere ist die elektrodynamische Fördereinheit 16a und die Transfereinheit 32a, betrachtet entlang der Haupttransportrichtung 54a der Transporteinheit 14a, zwischen dem Zuführtransportelement 50a und dem Abtransportelement 52a angeordnet. Es ist jedoch auch denkbar, dass die elektrodynamische Fördereinheit 16a und die Transfereinheit 32a an einer anderen, einem Fachmann als sinnvoll erscheinenden Position relativ zu den Transportabschnitten der Transporteinheit 14a angeordnet sind.

Die Transfereinheit 32a ist vorzugsweise zu einem Transfer von Produkten 12a von der Transporteinheit 14a, insbesondere von dem Zuführtransportelement 50a, zum Mover 18a und/oder zu einem Transfer von Produkten 12a von dem Mover 18a zur Transporteinheit 14a, insbesondere zum Abtransportelement 52a, vorgesehen. Die Transfereinheit 32a kann zumindest teilweise oder vollständig von physischen Elementen gebildet sein, wie beispielsweise von einer oder mehreren Produktrutsche/n, von einer oder mehreren Produktrampe/n, von einem Produkttransportband oder von mehreren Produkttransportbändern, von einer oder mehreren Produkttransportkette/n o. dgl. Alternativ oder zusätzlich kann die Transfereinheit 32a zumindest teilweise oder vollständig von einer Software gebildet sein, die zu einer Steuerung oder Regelung einer Bewegung des Movers 18a und/oder zu einer Steuerung oder Regelung einer Bewegung des Zuführtransportelements 50a vorgesehen ist, wie beispielsweise zu einer Steuerung oder Regelung einer Verzögerung des Movers 18a, insbesondere um eine trägheitsbedingte Übergabe von Produkten 12a von dem Mover 18a zum Abtransportelement 52a zu realisieren und/oder zu einer Steuerung oder Regelung einer Beschleunigung des Zuführtransportelements 50a sowie einer Bewegung des Movers 18a zu einer gezielten Übergabe, insbesondere eines "Einschießens", von auf dem Zuführtransportelement 50a angeordneten Produkten 12a an, insbesondere in, den Mover 18a o. dgl.

Bevorzugt umfasst die Handhabungsvorrichtung 10a zumindest eine Steueroder Regeleinheit 46a, die, insbesondere zumindest in dem in Figur 1 dargestellten Ausführungsbeispiel der Handhabungsvorrichtung 10a, zumindest teilweise einstückig mit der Transfereinheit 32a ausgebildet ist und die dazu eingerichtet ist, eine Beschleunigungskenngröße des Movers 18a derart zu steuern oder zu regeln, dass ein Produkttransfer von Produkten 12a zwischen der Transporteinheit 14a, insbesondere dem Abtransportelement 52a, und dem Mover 18a in Abhängigkeit von einer Änderung der Beschleunigungskenngröße durchführbar ist. Bevorzugt ist die Steuer- oder Regeleinheit 46a dazu eingerichtet, eine Verzögerung des Movers 18a derart zu steuern oder zu regeln, dass ein Produkttransfer von dem Mover 18a an die Transporteinheit 14a, insbesondere an das Abtransportelement 52a, in Abhängigkeit von der Verzögerung des Movers 18a durchführbar ist. Insbesondere ist ein in der Produktaufnahmeeinheit 20a angeordnetes Produkt 12a infolge eines durch die Steuer- oder Regeleinheit 46a hervorrufbaren Bremsvorgang des Movers 18a und einer trägheitsbedingten Weiterbewegung des Produkts 12a relativ zum Mover 18a durch eine zumindest teilweise offene Stirnseite 34a der Produktaufnahmeeinheit 20a an die Transporteinheit 14a, insbesondere an das Abtransportelement 52a, übergebbar. In dem in Figur 1 dargestellten Ausführungsbeispiel der Handhabungsvorrichtung 10a ist die Steueroder Regeleinheit 46a vorzugsweise dazu eingerichtet, eine Bewegung und/oder eine Beschleunigung der Transporteinheit 14a, insbesondere des Zuführtransportelements 50a, und eine Bewegung des Movers 18a derart zu steuern oder zu regeln, dass ein Produkttransfer von der Transporteinheit 14a, insbesondere von dem Zuführtransportelement 50a, an den Mover 18a derart erfolgt, dass der Mover 18a, insbesondere die Produktaufnahmeeinheit 20a, mit der offenen Stirnseite 34a der Transporteinheit 14a, insbesondere dem Zuführtransportelement 50a, zugewandt ist und die Transporteinheit 14a, insbesondere das Zuführtransportelement 50a, derart bewegt und/oder beschleunigt wird, dass ein Produkt 12a in die Produktaufnahmeeinheit 20a hineinbewegt, insbesondere "hineingeschossen", wird. Es ist jedoch alternativ oder zusätzlich denkbar, dass die Transfereinheit 32a in dem in Figur 1 dargestellten Ausführungsbeispiel der Handhabungsvorrichtung 10a ein Transferelement (in Figur 1 nicht näher dargestellt) am Ende des Zuführtransportelements 50a aufweist, das als Rampe ausgebildet ist, mittels derer ein Produkt 12a in die Produktaufnahmeeinheit 20a hineingleiten kann. Weitere, einem Fachmann als sinnvoll erscheinende Ausgestaltungen und/oder Funktionsweisen der Transfereinheit 32a und/oder der Steuer - oder Regeleinheit 46a zu einem Produkttransfer sind ebenfalls denkbar.

Figur 2 zeigt eine Detailansicht des Movers 18a, die vorzugsweise stellvertretend für alle Mover 18a der elektrodynamischen Fördereinheit 16a anzusehen ist. An dem Mover 18a ist die Produktaufnahmeeinheit 20a angeordnet. Die Produktaufnahmeeinheit 20a kann einteilig mit dem Mover 18a ausgebildet sein oder die Produktaufnahmeeinheit 20a kann mittels einer form- und/oder kraftschlüssigen Verbindung an dem Mover 18a fixiert sein. Die Produktaufnahmeeinheit 20a weist zumindest eine quer zu einer Auflagefläche 22a der Produktaufnahmeeinheit 20a verlaufende Seitenwand 24a, 26a, 28a auf, die zumindest teilweise einen Produktaufnahmeraum 30a der Produktaufnahmeeinheit 20a begrenzt. Die Produktaufnahmeeinheit 20a weist, betrachtet in einer zumindest im Wesentlichen senkrecht zu einer Haupterstreckungsebene der Produktaufnahmeeinheit 20a verlaufenden Ebene, zumindest die zumindest teilweise offene Stirnseite 34a auf. Die zumindest teilweise offene Stirnseite 34a der Produktaufnahmeeinheit 20a ist vorzugsweise durch ein Nichtvorhandensein einer Seitenwand an der Stirnseite 34a gebildet. Es ist jedoch auch denkbar, dass die, insbesondere in zumindest einem Zustand, zumindest teilweise offene Stirnseite 34a der Produktaufnahmeeinheit 20a durch zumindest eine durch zumindest zwei Teilabschnitte einer Seitenwand begrenzte Öffnung der an der Stirnseite 34a angeordneten Seitenwand gebildet ist, durch eine beweglich an der Stirnseite 34a gelagerte Seitenwand oder durch andere, einem Fachmann als sinnvoll erscheinende Ausgestaltungen der Produktaufnahmeeinheit 20a gebildet ist.

Bevorzugt umfasst die Produktaufnahmeeinheit 20a zumindest zwei, insbesondere zumindest im Wesentlichen parallel zueinander verlaufende, Seitenwände 24a, 28a, die quer zur Auflagefläche 22a verlaufen und zumindest teilweise den Produktaufnahmeraum 30a der Produktaufnahmeeinheit 20a begrenzen. In dem in den Figuren 1 und 2 dargestellten Ausführungsbeispiel der Handhabungsvorrichtung 10a umfasst die Produktaufnahmeeinheit 20a insgesamt zumindest drei Seitenwände 24a, 26a, 28a, die quer, insbesondere zumindest im Wesentlichen senkrecht, zur Auflagefläche 22a der Produktaufnahmeeinheit 20a verlaufen, wobei zwei der drei Seitenwände 24a, 28a zumindest im Wesentlichen parallel zueinander ausgerichtet sind und eine Seitenwand 26a der drei Seitenwände 24a, 26a, 28a quer, insbesondere zumindest im Wesentlichen senkrecht, zu den zwei Seitenwänden 24a, 28a der drei Seitenwände 24a, 26a, 28a ausgerichtet ist. Die drei Seitenwände 24a, 26a, 28a bilden, betrachtet in einer zumindest im Wesentlichen senkrecht zur Auflagefläche 22a und/oder zur Haupterstreckungsebene verlaufenden Draufsicht, vorzugsweise eine U-förmige Umrandung des Produktaufnahmeraums 30a.

Die Produktaufnahmeeinheit 20a weist zumindest einen Boden 36a auf, der zumindest eine schlitzartige oder nutartige Aussparung 38a aufweist, die zu einem Beeinflussen einer Reibung zwischen einem in der Produktaufnahmeeinheit 20a angeordneten Produkt 12a und dem Boden 36a der Produktaufnahmeeinheit 20a vorgesehen ist. Die schlitzartige oder nutartige Aussparung 38a erstreckt sich bevorzugt ausgehend von der zumindest teilweise offenen Stirnseite 34a zumindest zum Großteil über die gesamte Längserstreckung der Produktaufnahmeeinheit 20a. Vorzugsweise ist der Boden 36a einteilig mit den Seitenwänden 24a, 26a, 28a der Produktaufnahmeeinheit 20a ausgebildet. Es ist jedoch auch denkbar, dass die Seitenwände 24a, 26a, 28a mittels einer form- und/oder kraftschlüssigen Verbindung an dem Boden 36a fixiert sind, wie beispielsweise mittels einer Steckverbindung, einer Rastverbindung, einer Nut-und-Feder-Verbindung o. dgl. Der Boden 36a erstreckt sich vorzugsweise quer, insbesondere zumindest im Wesentlichen senkrecht, zu den Seitenwänden 24a, 26a, 28a. Bevorzugt bildet der Boden 36a, insbesondere zumindest teilweise, die Auflagefläche 22a. In dem in den Figuren 1 und 2 dargestellten Ausführungsbeispiel der Handhabungsvorrichtung 10a umfasst der Boden 36a eine Vielzahl an schlitzartigen oder nutartigen Aussparungen 38a, die zu einem Beeinflussen einer Reibung zwischen einem in der Produktaufnahmeeinheit 20a angeordneten Produkt 12a und dem Boden 36a der Produktaufnahmeeinheit 20a vorgesehen ist. Vorzugsweise verlaufen die schlitzartigen oder nutartigen Aussparungen 38a alle zumindest im Wesentlichen parallel zueinander und insbesondere alle zumindest im Wesentlichen senkrecht zu der zumindest teilweise offenen Stirnseite 34a. Die schlitzartigen oder nutartigen Aussparungen 38a bilden vorzugsweise Längsrillen im Boden 36a der Produktaufnahmeeinheit 20a. Bevorzugt sind die schlitzartigen oder nutartigen Aussparungen 38a durch Stege 58a der Produktaufnahmeeinheit 20a voneinander getrennt, wobei Oberseiten der Stege 58a die Auflagefläche 22a der Produktaufnahmeeinheit 20a bilden. Zudem ist denkbar, dass die Auflagefläche 22a der Produktaufnahmeeinheit 20a zu einem Beeinflussen einer Reibung zwischen einem in der Produktaufnahmeeinheit 20a angeordneten Produkt 12a und dem Boden 36a mit einer Antihaftbeschichtung, wie beispielsweise einer Beschichtung aus Polytetrafluorethylen (PTFE), aus Keramik, aus Diamond-like-Carbon-Schicht (DLC-Schicht) o. dgl., versehen ist oder dass der Boden 36a, insbesondere die Auflagefläche 22a, aus einem Antihaftmaterial, wie beispielsweise aus Polytetrafluorethylen (PTFE), aus Keramik o. dgl., gebildet ist.

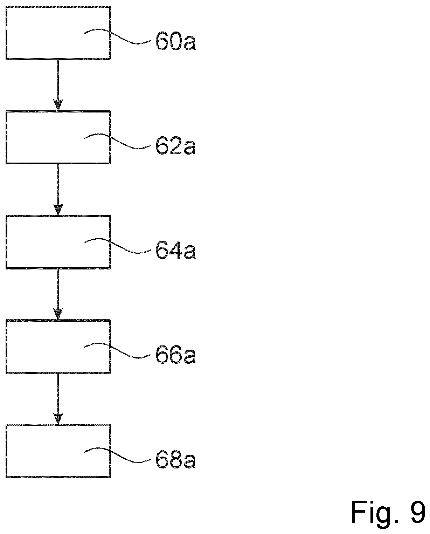

In Figur 9 ist ein schematischer Verfahrensablauf eines Verfahrens zu einer Übergabe von Produkten 12a mittels der Handhabungsvorrichtung 10a dargestellt, wobei der Verfahrensablauf zumindest im Wesentlichen für alle Ausführungsbeispiele der hierin beschriebenen Handhabungsvorrichtungen 10a; 10b; 10c; 10d; 10e; 10f zutrifft. Auf Unterschiede des Verfahrensablaufs wird im Einzelnen bei den entsprechenden Ausführungsbeispielen eingegangen.

Das Verfahren zu einer Übergabe von Produkten 12a, insbesondere von Lebensmitteln, mittels der Handhabungsvorrichtung 10a umfasst in zumindest einem Verfahrensschritt 60a ein Zuführen von Produkten 12a mittels der Transporteinheit 14a, insbesondere mittels des Zuführtransportelements 50a. In zumindest einem Verfahrensschritt 62a des Verfahrens erfolgt ein Produkttransfer von zumindest einem Produkt 12a von der Transporteinheit 14a, insbesondere von dem Zuführtransportelement 50a, zu einem der Mover 18a mittels der Transfereinheit 32a. In zumindest einem Verfahrensschritt 64a des Verfahrens erfolgt ein Transport von zumindest einem Produkt 12a mittels des zumindest einen Movers 18a über die Bewegungsflächenelemente 56a zum Abtransportelement 52a. In zumindest einem Verfahrensschritt 66a erfolgt ein Produkttransfer von dem Mover 18a zum Abtransportelement 52a. Zu einem Produkttransfer von dem zumindest einem Produkt 12a zwischen der Transporteinheit 14a und dem Mover 18a, insbesondere von dem Mover 18a zum Abtransportelement 52a, wird das Produkt 12a über die offene Stirnseite 34a aus dem Produktaufnahmeraum 30a herausgefördert. In dem in den Figuren 1 und 2 dargestellten Ausführungsbeispiel der Handhabungsvorrichtung 10a wird ein Produkttransfer von zumindest einem Produkt 12a zwischen der Transporteinheit 14a und dem Mover 18a, insbesondere von dem Mover 18a zum Abtransportelement 52a, in Abhängigkeit von einer Änderung einer Beschleunigungskenngröße, insbesondere in Abhängigkeit von einer Verzögerung, des Movers 18a durchgeführt. In zumindest einem Verfahrensschritt 68a erfolgt ein Abtransport von Produkten 12a mittels des Abtransportelements 52a, insbesondere zu weiteren Vorrichtungen und/oder Einheiten der Produktionsmaschine 48a. Weitere, einem Fachmann als sinnvolle erscheinende zusätzliche oder alternative Verfahrensschritte sind ebenfalls denkbar.

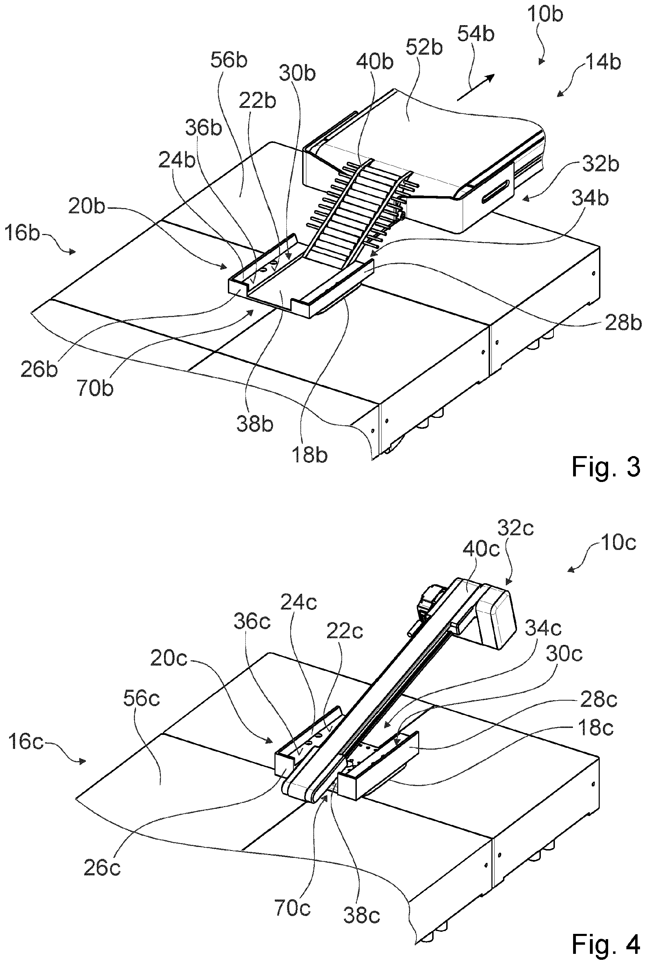

In Figuren 3 bis 8 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1, 2 und 9, verwiesen werden kann. Zur Unterscheidung der Ausführungsbeispiele ist der Buchstabe a den Bezugszeichen des Ausführungsbeispiels in den Figuren 1, 2 und 9 nachgestellt. In den Ausführungsbeispielen der Figuren 3 bis 8 ist der Buchstabe a durch die Buchstaben b bis f ersetzt.

Figur 3 zeigt eine Handhabungsvorrichtung 10b zu einer Übergabe von Produkten (hier nicht näher dargestellt), insbesondere von Lebensmitteln, mit zumindest einer Transporteinheit 14b, insbesondere einer Förderbandeinheit, mit zumindest einer elektrodynamischen Fördereinheit 16b, die zumindest einen elektrodynamisch beweglichen Mover 18b und zumindest eine am Mover 18b angeordnete Produktaufnahmeeinheit 20b umfasst, die zumindest eine quer zu einer Auflagefläche 22b der Produktaufnahmeeinheit 20b verlaufende Seitenwand 24b, 26b, 28b, die zumindest teilweise einen Produktaufnahmeraum 30b der Produktaufnahmeeinheit 20b begrenzt, aufweist, und mit zumindest einer Transfereinheit 32b zu einem Produkttransfer von Produkten zwischen der Transporteinheit 14b und dem Mover 18b. Die Produktaufnahmeeinheit 20b weist, betrachtet in einer zumindest im Wesentlichen senkrecht zu einer Haupterstreckungsebene der Produktaufnahmeeinheit 20b verlaufenden Ebene, zumindest eine zumindest teilweise offene Stirnseite 34b auf. Die in der Figur 3 dargestellte Produktaufnahmeeinheit 20b umfasst bevorzugt zumindest zwei zumindest teilweise offene Stirnseiten 34b, 70b. Eine Stirnseite 34b der zumindest teilweise offenen Stirnseiten 34b, 70b der Produktaufnahmeeinheit 20b ist bevorzugt durch ein Nichtvorhandensein einer Seitenwand an der Stirnseite 34b gebildet. Die andere Stirnseite 70b der zumindest teilweise offenen Stirnseiten 34b, 70b wird vorzugsweise durch zumindest eine durch zumindest zwei Teilabschnitte einer Seitenwand 26b der Produktaufnahmeeinheit 20b begrenzte Öffnung der an der anderen Stirnseite 70b angeordneten Seitenwand 26b gebildet. Bevorzugt umfasst die Produktaufnahmeeinheit 20b zumindest drei Seitenwände 24b, 26b, 28b, die quer, insbesondere zumindest im Wesentlichen senkrecht, zur Auflagefläche 22b der Produktaufnahmeeinheit 20b verlaufen, wobei zwei Seitenwände 24b, 28b der drei Seitenwände 24b, 26b, 28b zumindest im Wesentlichen parallel zueinander ausgerichtet sind und eine Seitenwand 26b der drei Seitenwände 24b, 26b, 28b, die in zwei Teilabschnitte unterteilt ist, quer, insbesondere zumindest im Wesentlichen senkrecht, zu den zwei Seitenwänden 24b, 28b der drei Seitenwände 24b, 26b, 28b ausgerichtet ist. Die drei Seitenwände 24b, 26b, 28b bilden, betrachtet in einer zumindest im Wesentlichen senkrecht zur Auflagefläche 22b und/oder zur Haupterstreckungsebene verlaufenden Draufsicht, zwei L-förmige Umrandungen des Produktaufnahmeraums 30b.

Die Produktaufnahmeeinheit 20b weist zumindest einen Boden 36b auf, der zumindest eine schlitzartige oder nutartige Aussparung 38b aufweist, die zu einer Einführung zumindest eines Transferelements 40b der Transfereinheit 32b vorgesehen ist. Die schlitzartige oder nutartige Aussparung 38b erstreckt sich ausgehend von der zumindest teilweise offenen Stirnseite 34b zumindest zum Großteil über die gesamte Längserstreckung der Produktaufnahmeeinheit 20b, insbesondere bis hin zur anderen zumindest teilweise offenen Stirnseite 70b.

Das Transferelement 40b ist vorzugsweise an einem Übergang zwischen der elektrodynamischen Fördereinheit 16b und der Transporteinheit 14b, insbesondere an einem Abtransportelement 52b der Transporteinheit 14b, angeordnet. Das Transferelement 40b ist bevorzugt relativ zu einer Transportfläche der Transporteinheit 14b, insbesondere des Abtransportelements 52b, geneigt ausgerichtet. Bevorzugt weist das Transferelement 40b eine Vielzahl an Rollen auf, die entlang einer Steigung des Transferelements 40b hintereinander angeordnet sind. Die Rollen des Transferelements 40b können individuell oder zusammen antreibbar sein oder antriebslos ausgebildet sein. Vorzugsweise wird das Transferelement 40b der Transfereinheit 32b zu einem Produkttransfer von zumindest einem Produkt zwischen der Transporteinheit 14b und dem Mover 18b, insbesondere von dem Mover 18b zum Abtransportelement 52b, in die schlitzartige oder nutartige Aussparung 38b des Bodens 36b der Produktaufnahmeeinheit 20b eingeführt. Der Mover 18b wird unter dem Transferelement 40b hindurchbewegt, um das Produkt an das Transferelement 40b zu übergeben oder dem Produkt einen Impuls zu geben, so dass das Produkt 12b die Steigung des Transferelements 40b bis zum Abtransportelement 52b hinaufbewegt wird. Der Mover 18b fährt zu einem Produkttransfer von zumindest einem Produkt zwischen der Transporteinheit 14b und dem Mover 18b, insbesondere von dem Mover 18b an das Abtransportelement 52b, unter dem Transferelement 40b der Transfereinheit 32b hindurch. Weitere Merkmale der Handhabungsvorrichtung 10b und/oder einem Verfahren zu einer Übergabe von Produkten können vorzugsweise der Beschreibung der Figuren 1, 2 und 8 entnommen werden.

Figur 4 zeigt eine Handhabungsvorrichtung 10c zu einer Übergabe von Produkten (hier nicht näher dargestellt), insbesondere von Lebensmitteln, mit zumindest einer Transporteinheit (hier nicht näher dargestellt), insbesondere einer Förderbandeinheit, mit zumindest einer elektrodynamischen Fördereinheit 16c, die zumindest einen elektrodynamisch beweglichen Mover 18c und zumindest eine am Mover 18c angeordnete Produktaufnahmeeinheit 20c umfasst, die zumindest eine quer zu einer Auflagefläche 22c der Produktaufnahmeeinheit 20c verlaufende Seitenwand 24c, 26c, 28c, die zumindest teilweise einen Produktaufnahmeraum 30c der Produktaufnahmeeinheit 20c begrenzt, aufweist, und mit zumindest einer Transfereinheit 32c zu einem Produkttransfer von Produkten zwischen der Transporteinheit und dem Mover 18c. Die Produktaufnahmeeinheit 20c weist, betrachtet in einer zumindest im Wesentlichen senkrecht zu einer Haupterstreckungsebene der Produktaufnahmeeinheit 20c verlaufenden Ebene, zumindest eine zumindest teilweise offene Stirnseite 34c auf. Die in der Figur 4 dargestellte Produktaufnahmeeinheit 20c umfasst bevorzugt zumindest zwei zumindest teilweise offene Stirnseiten 34c, 70c. Eine Stirnseite 34c der zumindest teilweise offenen Stirnseiten 34c, 70c der Produktaufnahmeeinheit 20c ist bevorzugt durch ein Nichtvorhandensein einer Seitenwand an der Stirnseite 34c gebildet. Die andere Stirnseite 70c der zumindest teilweise offenen Stirnseiten 34c, 70c wird vorzugsweise durch zumindest eine durch zumindest zwei Teilabschnitte einer Seitenwand 26c der Produktaufnahmeeinheit 20c begrenzte Öffnung der an der anderen Stirnseite 70c angeordneten Seitenwand 26c gebildet. Bevorzugt umfasst die Produktaufnahmeeinheit 20c zumindest drei Seitenwände 24c, 26c 28c, die quer, insbesondere zumindest im Wesentlichen senkrecht, zur Auflagefläche 22c der Produktaufnahmeeinheit 20c verlaufen, wobei zwei Seitenwände 24c, 28c der drei Seitenwände 24c, 26c, 28b zumindest im Wesentlichen parallel zueinander ausgerichtet sind und eine Seitenwand 26c der drei Seitenwände 24c, 26c, 28c, die in zwei Teilabschnitte unterteilt ist, quer, insbesondere zumindest im Wesentlichen senkrecht, zu den zwei Seitenwänden 24c, 28c der drei Seitenwände 24c, 26c, 28c ausgerichtet ist. Die drei Seitenwände 24c, 26c, 28c bilden, betrachtet in einer zumindest im Wesentlichen senkrecht zur Auflagefläche 22c und/oder zur Haupterstreckungsebene verlaufenden Draufsicht, zwei L-förmige Umrandungen des Produktaufnahmeraums 30c.

Die Produktaufnahmeeinheit 20c weist zumindest einen Boden 36c auf, der zumindest eine schlitzartige oder nutartige Aussparung 38c aufweist, die zu einer Einführung zumindest eines Transferelements 40c der Transfereinheit 32c vorgesehen ist. Die schlitzartige oder nutartige Aussparung 38c erstreckt sich ausgehend von der zumindest teilweise offenen Stirnseite 34c zumindest zum Großteil über die gesamte Längserstreckung der Produktaufnahmeeinheit 20c, insbesondere bis hin zur anderen zumindest teilweise offenen Stirnseite 70c.

Das Transferelement 40c ist vorzugsweise an einem Übergang zwischen der elektrodynamischen Fördereinheit 16c und der Transporteinheit, insbesondere an einem Abtransportelement (hier nicht näher dargestellt) der Transporteinheit, angeordnet. Das Transferelement 40c ist bevorzugt relativ zu einer Transportfläche der Transporteinheit, insbesondere des Abtransportelements, geneigt ausgerichtet. Bevorzugt ist das Transferelement 40c als endloser Förderriemen ausgebildet, der umlaufend antreibbar ist. Vorzugsweise wird das Transferelement 40c der Transfereinheit 32c zu einem Produkttransfer von zumindest einem Produkt zwischen der Transporteinheit und dem Mover 18c, insbesondere von dem Mover 18c zum Abtransportelement, in die schlitzartige oder nutartige Aussparung 38c des Bodens 36c der Produktaufnahmeeinheit 20c eingeführt. Der Mover 18c wird unter dem Transferelement 40c hindurchbewegt, um das Produkt an das Transferelement 40c zu übergeben. Sobald das Produkt in Kontakt mit dem Transferelement 40c gelangt, wird das Produkt vorzugsweise infolge des angetriebenen Transferelements 40c von dem Mover 18c abgenommen, mittels des Transferelements 40c weitertransportiert und an das Abtransportelement übergeben. Der Mover 18c fährt zu einem Produkttransfer von zumindest einem Produkt zwischen der Transporteinheit und dem Mover 18c, insbesondere von dem Mover 18c an das Abtransportelement, unter dem Transferelement 40c der Transfereinheit 32c hindurch. Weitere Merkmale der Handhabungsvorrichtung 10c und/oder einem Verfahren zu einer Übergabe von Produkten können vorzugsweise der Beschreibung der Figuren 1, 2 und 8 entnommen werden.

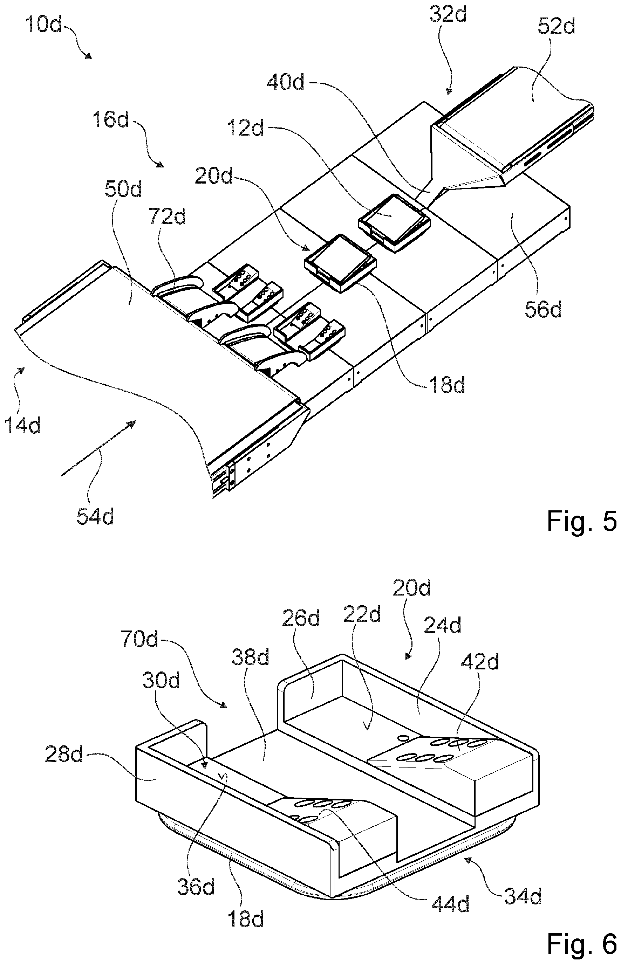

Figur 5 zeigt eine Handhabungsvorrichtung 10d zu einer Übergabe von Produkten 12d, insbesondere von Lebensmitteln, mit zumindest einer Transporteinheit 14d, insbesondere einer Förderbandeinheit, mit zumindest einer elektrodynamischen Fördereinheit 16d, die zumindest einen elektrodynamisch beweglichen Mover 18d und zumindest eine am Mover 18d angeordnete Produktaufnahmeeinheit 20d umfasst, die zumindest eine quer zu einer Auflagefläche 22d der Produktaufnahmeeinheit 20d verlaufende Seitenwand 24d, 26d, 28d, die zumindest teilweise einen Produktaufnahmeraum 30d der Produktaufnahmeeinheit 20d begrenzt, aufweist, und mit zumindest einer Transfereinheit 32d zu einem Produkttransfer von Produkten 12d zwischen der Transporteinheit 14d und dem Mover 18d. Die Produktaufnahmeeinheit 20d weist, betrachtet in einer zumindest im Wesentlichen senkrecht zu einer Haupterstreckungsebene der Produktaufnahmeeinheit 20d verlaufenden Ebene, zumindest eine zumindest teilweise offene Stirnseite 34d auf. Die in den Figuren 5 und 6 dargestellte Produktaufnahmeeinheit 20d umfasst bevorzugt zumindest zwei zumindest teilweise offene Stirnseiten 34d, 70d. Eine Stirnseite 34d der zumindest teilweise offenen Stirnseiten 34d, 70d der Produktaufnahmeeinheit 20d ist bevorzugt durch ein Nichtvorhandensein einer Seitenwand an der Stirnseite 34d gebildet. Die andere Stirnseite 70d der zumindest teilweise offenen Stirnseiten 34d, 70d wird vorzugsweise durch zumindest eine durch zumindest zwei Teilabschnitte einer Seitenwand 26d der Produktaufnahmeeinheit 20d begrenzte Öffnung der an der anderen Stirnseite 70d angeordneten Seitenwand 26d gebildet. Bevorzugt umfasst die Produktaufnahmeeinheit 20d zumindest drei Seitenwände 24d, 26d, 28d, die quer, insbesondere zumindest im Wesentlichen senkrecht, zur Auflagefläche 22d der Produktaufnahmeeinheit 20d verlaufen, wobei zwei Seitenwände 24d, 28d der drei Seitenwände 24d, 26d, 28d zumindest im Wesentlichen parallel zueinander ausgerichtet sind und eine Seitenwand 26d der drei Seitenwände 24d, 26d, 28d, die in zwei Teilabschnitte unterteilt ist, quer, insbesondere zumindest im Wesentlichen senkrecht, zu den zwei Seitenwänden 24d, 28d der drei Seitenwände 24d, 26d, 28d ausgerichtet ist. Die drei Seitenwände 24d, 26d, 28d bilden, betrachtet in einer zumindest im Wesentlichen senkrecht zur Auflagefläche 22d und/oder zur Haupterstreckungsebene verlaufenden Draufsicht, zwei L-förmige Umrandungen des Produktaufnahmeraums 30d.

Die Produktaufnahmeeinheit 20d weist zumindest einen Boden 36d auf, der zumindest eine schlitzartige oder nutartige Aussparung 38d aufweist, die zu einer Einführung zumindest eines Transferelements 40d der Transfereinheit 32d vorgesehen ist. Die schlitzartige oder nutartige Aussparung 38d erstreckt sich ausgehend von der zumindest teilweise offenen Stirnseite 34d zumindest zum Großteil über die gesamte Längserstreckung der Produktaufnahmeeinheit 20d, insbesondere bis hin zur anderen zumindest teilweise offenen Stirnseite 70d.

Die Produktaufnahmeeinheit 20d weist zumindest ein Rampenelement 42d, 44d auf, das dazu vorgesehen ist, Produkte 12d geneigt im Produktaufnahmeraum 30d anzuordnen. Vorzugsweise ist das Rampenelement 42d, 44d relativ zum Boden 36d geneigt ausgerichtet. Bevorzugt ist das Rampenelement 42d, 44d lediglich in einem Teilbereich des Produktaufnahmeraums 30d angeordnet. Das Rampenelement 42d, 44d ist insbesondere direkt angrenzend an zumindest eine der Seitenwände 24d, 28d angeordnet. Das Rampenelement 42d, 44d ist vorzugsweise seitlich versetzt zur Aussparung 38d angeordnet. Die Produktaufnahmeeinheit 20d umfasst vorzugsweise zumindest zwei Rampenelemente 42d, 44d. Die zumindest zwei Rampenelemente 42d, 44d sind vorzugsweise spiegelsymmetrisch zu einer Längsachse der Produktaufnahmeeinheit 20d im Produktaufnahmeraum 30d angeordnet. Es ist auch denkbar, dass die zumindest zwei Rampenelemente 42d, 44d eine andere, einem Fachmann als sinnvoll erscheinende Anordnung im Produktaufnahmeraum 30d aufweisen. Vorzugsweise weisen die zumindest zwei Rampenelemente 42d, 44d eine zumindest im Wesentlichen analoge Ausgestaltung auf. Vorzugsweise sind die zwei Rampenelemente 42d, 44d seitlich versetzt zur Aussparung 38d angeordnet. Insbesondere ist je eines der Rampenelemente 42d, 44d an einer Seite der Aussparung 38d angeordnet. Vorzugsweise ist eines der Rampenelemente 42d, 44d linksseitig versetzt zur Aussparung 38d angeordnet und das andere der Rampenelemente 42d, 44d ist rechtsseitig versetzt zur Aussparung 38d angeordnet. Die Aussparung 38d ist vorzugsweise zwischen den zwei Rampenelementen 42d, 44d angeordnet, insbesondere betrachtet entlang einer zumindest im Wesentlichen senkrecht zur Längsachse der Produktaufnahmeeinheit 20d verlaufenden Richtung.

Das Transferelement 40d ist vorzugsweise an einem Übergang zwischen der elektrodynamischen Fördereinheit 16d und der Transporteinheit 14d, insbesondere an einem Abtransportelement 52d der Transporteinheit 14d, angeordnet. Das Transferelement 40d ist bevorzugt relativ zu einer Transportfläche der Transporteinheit 14d, insbesondere des Abtransportelements 52d, geneigt ausgerichtet. Bevorzugt ist das Transferelement 40d als antriebslose Rampe ausgebildet. Vorzugsweise wird das Transferelement 40d der Transfereinheit 32d zu einem Produkttransfer von zumindest einem Produkt 12d zwischen der Transporteinheit 14d und dem Mover 18d, insbesondere von dem Mover 18d zum Abtransportelement 52d, in die schlitzartige oder nutartige Aussparung 38d des Bodens 36d der Produktaufnahmeeinheit 20d eingeführt. Der Mover 18d wird unter dem Transferelement 40d hindurchbewegt, um das Produkt 12d an das Transferelement 40d zu übergeben und dem Produkt 12d einen Impuls zu geben, so dass das Produkt 12d die Steigung des Transferelements 40d bis zum Abtransportelement 52d hinaufbewegt wird. Der Mover 18d fährt zu einem Produkttransfer von zumindest einem Produkt 12d zwischen der Transporteinheit 14d und dem Mover 18d, insbesondere von dem Mover 18d an das Abtransportelement 52d, unter dem Transferelement 40d der Transfereinheit 32d hindurch.

Die Transfereinheit 32d umfasst vorzugsweise zumindest ein weiteres Transferelement 72d. Das weitere Transferelement 72d ist zu einem Produkttransfer von zumindest einem Produkt 12d zwischen der Transporteinheit 14d und dem Mover 18d, insbesondere von einem Zuführtransportelement 50d der Transporteinheit 14d an den Mover 18d, vorgesehen. Das weitere Transferelement 72d ist vorzugsweise zwischen der Transporteinheit 14d, insbesondere dem Zuführtransportelement 50d, und der elektrodynamischen Fördereinheit 16d angeordnet, insbesondere am Ende des Zuführtransportelements 50d. Das weitere Transferelement 72d ist bevorzugt als antriebslose Rampe ausgebildet. Das weitere Transferelement 72d kann vorzugsweise verstellbar an dem Zuführtransportelement 50d angeordnet sein, insbesondere hinsichtlich einer Neigung und/oder einer Position. Das weitere Transferelement 72d ist vorzugsweise relativ zu einer Transportfläche der Transporteinheit 14d, insbesondere des Zuführtransportelements 50d geneigt ausgerichtet, insbesondere um ein Hineingleiten von zumindest einem Produkt 12d in den Produktaufnahmeraum 30d bei einem Produkttransfer von dem Zuführtransportelement 50d an den Mover 18d zu realisieren. Eine Rampenoberfläche des weiteren Transferelements 72d weist vorzugsweise einen parabelförmigen Verlauf auf. Es ist jedoch auch denkbar, dass die Rampenoberfläche einen geradlinigen Verlauf aufweist. Zudem ist denkbar, dass die Transfereinheit 32d eine Vielzahl an weiteren Transferelementen 72d aufweist, die alle gleich oder unterschiedlich ausgebildet sind. Weitere Merkmale der Handhabungsvorrichtung 10d und/oder einem Verfahren zu einer Übergabe von Produkten 12d können vorzugsweise der Beschreibung der Figuren 1, 2 und 8 entnommen werden.

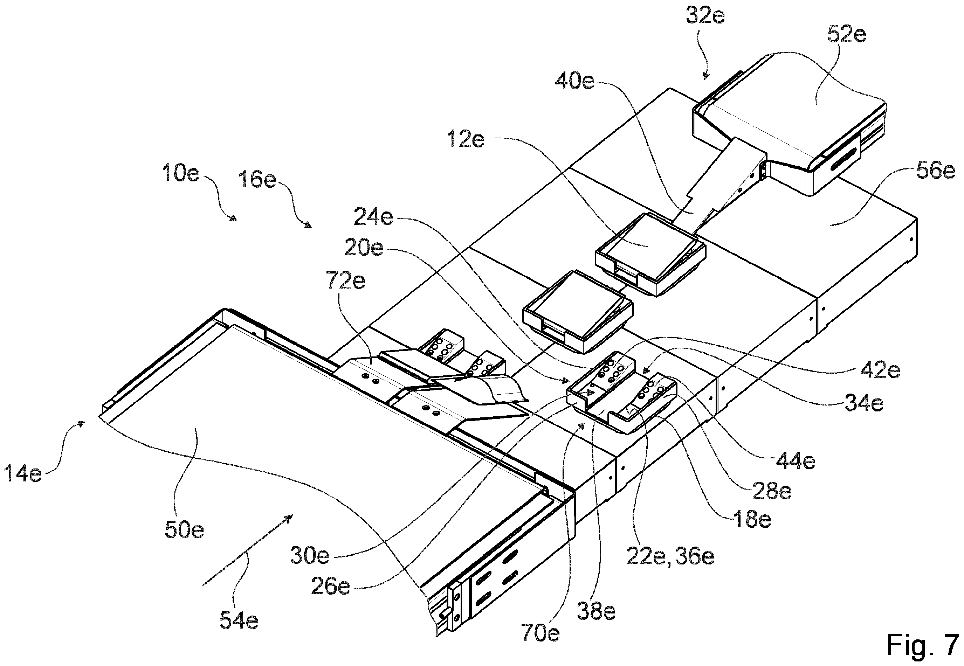

Figur 7 zeigt eine Handhabungsvorrichtung 10e zu einer Übergabe von Produkten 12e, insbesondere von Lebensmitteln, mit zumindest einer Transporteinheit 14e, insbesondere einer Förderbandeinheit, mit zumindest einer elektrodynamischen Fördereinheit 16e, die zumindest einen elektrodynamisch beweglichen Mover 18e und zumindest eine am Mover 18e angeordnete Produktaufnahmeeinheit 20e umfasst, die zumindest eine quer zu einer Auflagefläche 22e der Produktaufnahmeeinheit 20e verlaufende Seitenwand 24e, 26e, 28e, die zumindest teilweise einen Produktaufnahmeraum 30e der Produktaufnahmeeinheit 20e begrenzt, aufweist, und mit zumindest einer Transfereinheit 32e zu einem Produkttransfer von Produkten 12e zwischen der Transporteinheit 14e und dem Mover 18e. Die Produktaufnahmeeinheit 20e weist, betrachtet in einer zumindest im Wesentlichen senkrecht zu einer Haupterstreckungsebene der Produktaufnahmeeinheit 20e verlaufenden Ebene, zumindest eine zumindest teilweise offene Stirnseite 34e auf. Die in der Figur 7 dargestellte Produktaufnahmeeinheit 20e umfasst bevorzugt zumindest zwei zumindest teilweise offene Stirnseiten 34e, 70e. Grundsätzlich darf hinsichtlich der Ausgestaltung der in Figur 7 dargestellten Handhabungsvorrichtung 10e auf die Beschreibung der Figuren 5 und 6 verwiesen werden, die analog auf die in Figur 7 dargestellte Handhabungsvorrichtung 10e zu lesen ist. Im Unterschied zu den Figuren 5 und 6 weist die Transfereinheit 32e der in Figur 7 dargestellten Handhabungsvorrichtung 10e zumindest ein weiteres Transferelement 72e auf, das einen geradlinigen Verlauf einer Rampenoberfläche des weiteren Transferelements 72e aufweist, insbesondere keinen parabelförmigen Verlauf. Weitere Merkmale der Handhabungsvorrichtung 10e und/oder einem Verfahren zu einer Übergabe von Produkten 12e können vorzugsweise der Beschreibung der Figuren 1, 2 und 8 entnommen werden.

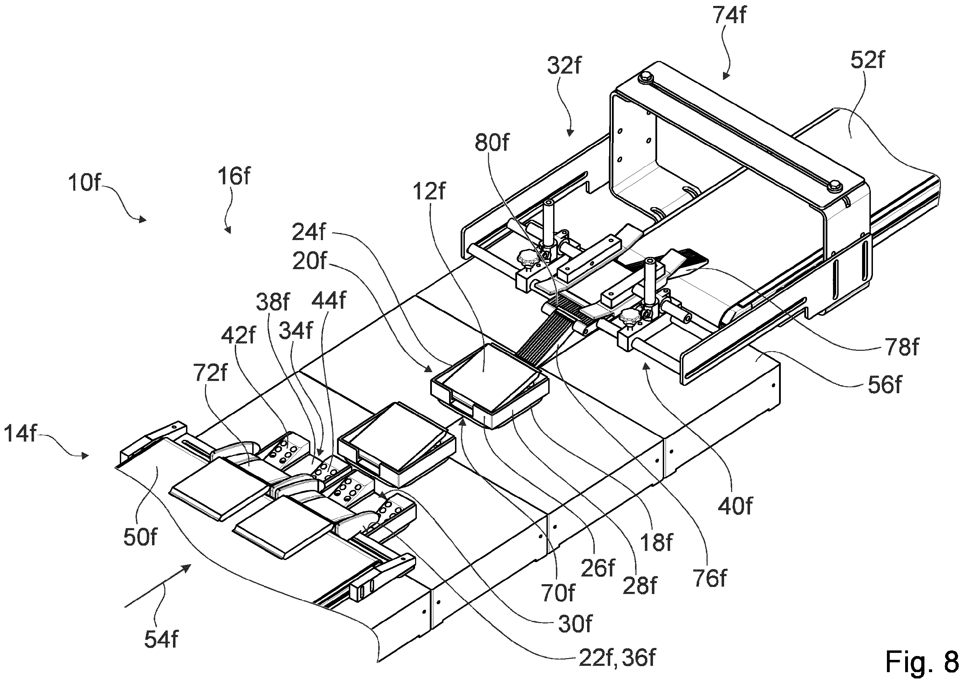

Figur 8 zeigt eine Handhabungsvorrichtung 10f zu einer Übergabe von Produkten 12f, insbesondere von Lebensmitteln, mit zumindest einer Transporteinheit 14f, insbesondere einer Förderbandeinheit, mit zumindest einer elektrodynamischen Fördereinheit 16f, die zumindest einen elektrodynamisch beweglichen Mover 18f und zumindest eine am Mover 18f angeordnete Produktaufnahmeeinheit 20f umfasst, die zumindest eine quer zu einer Auflagefläche 22f der Produktaufnahmeeinheit 20f verlaufende Seitenwand 24f, 26f, 28f, die zumindest teilweise einen Produktaufnahmeraum 30f der Produktaufnahmeeinheit 20f begrenzt, aufweist, und mit zumindest einer Transfereinheit 32f zu einem Produkttransfer von Produkten 12f zwischen der Transporteinheit 14f und dem Mover 18f. Die Produktaufnahmeeinheit 20f weist, betrachtet in einer zumindest im Wesentlichen senkrecht zu einer Haupterstreckungsebene der Produktaufnahmeeinheit 20f verlaufenden Ebene, zumindest eine zumindest teilweise offene Stirnseite 34f auf. Die in der Figur 8 dargestellte Produktaufnahmeeinheit 20f umfasst bevorzugt zumindest zwei zumindest teilweise offene Stirnseiten 34f, 70f. Grundsätzlich darf hinsichtlich der Ausgestaltung der in Figur 8 dargestellten Handhabungsvorrichtung 10f auf die Beschreibung der Figuren 5 und 6 verwiesen werden, die analog auf die in Figur 8 dargestellte Handhabungsvorrichtung 10f zu lesen ist. Im Unterschied zu den Figuren 5 und 6 weist die Transfereinheit 32f der in Figur 8 dargestellten Handhabungsvorrichtung 10f zumindest ein Transferelement 40f auf, das mittels einer Einstelleinheit 74f der Handhabungsvorrichtung 10f in einer vertikalen und/oder in einer horizontalen Position einstellbar ist. Zudem umfasst das Transferelement 40f bevorzugt zumindest zwei Rampenabschnitte 76f, 78f und einen dazwischenliegenden Förderabschnitt 80f. Die Rampenabschnitte 76f, 78f sind vorzugsweise jeweils zu einer Transportfläche der Transporteinheit 14f, insbesondere eines Abtransportelements 52f der Transporteinheit 14f geneigt, wobei die Rampenabschnitte 76f, 78f gegensätzlich ausgerichtet sind. Der Förderabschnitt 80f ist bevorzugt als endloser Riemen, der umlaufend antreibbar ist, ausgebildet. Es ist jedoch auch denkbar, dass der Förderabschnitt 80f antriebslos ausgebildet ist und die Produkte 12f infolge eines von dem Mover 18f auf die Produkte 12f übertragenen Impulses über den Förderabschnitt 80f hinweggleiten. Vorzugsweise ist der Förderabschnitt 80f, insbesondere eine Förderfläche des Förderabschnitts 80f, zumindest im Wesentlichen parallel zur Transportfläche der Transporteinheit 14f, insbesondere des Abtransportelements 52f, versetzt angeordnet. Insbesondere ist ein vertikaler Abstand zwischen der Transportfläche der Transporteinheit 14f, insbesondere des Abtransportelements 52f, und der Förderfläche des Förderabschnitts 80f mittels der Einstelleinheit 74f einstellbar. Die Einstelleinheit 74f umfasst vorzugsweise einen Rahmen und daran angeordnete Einstellführungselemente zu einer Einstellung einer vertikalen und einer horizontalen Position des Transferelements 40f. Weitere Merkmale der Handhabungsvorrichtung 10f und/oder einem Verfahren zu einer Übergabe von Produkten 12f können vorzugsweise der Beschreibung der Figuren 1, 2 und 8 entnommen werden.

## Patentansprüche

1. Handhabungsvorrichtung zu einer Übergabe von Produkten (12a; 12d; 12e; 12f), insbesondere von Lebensmitteln, mit zumindest einer Transporteinheit (14a; 14b; 14d; 14e; 14f), insbesondere einer Förderbandeinheit, mit zumindest einer elektrodynamischen Fördereinheit (16a; 16b; 16c; 16d; 16e; 16f), die zumindest einen elektrodynamisch beweglichen Mover (18a; 18b; 18c; 18d; 18e; 18f) und zumindest eine am Mover (18a; 18b; 18c; 18d; 18e; 18f) angeordnete Produktaufnahmeeinheit (20a; 20b; 20c; 20d; 20e; 20f) umfasst, die zumindest eine quer zu einer Auflagefläche (22a; 22b; 22c; 22d; 22e; 22f) der Produktaufnahmeeinheit (20a; 20b; 20c; 20d; 20e; 20f) verlaufende Seitenwand (24a, 26a, 28a; 24b, 26b, 28b; 24c, 26c, 28c; 24d, 26d, 28d; 24e, 26e, 28e; 24f, 26f, 28f), die zumindest teilweise einen Produktaufnahmeraum (30a; 30b; 30c; 30d; 30e; 30f) der Produktaufnahmeeinheit (20a; 20b; 20c; 20d; 20e; 20f) begrenzt, aufweist, und mit zumindest einer Transfereinheit (32a; 32b; 32c; 32d; 32e; 32f) zu einem Produkttransfer von Produkten (12a; 12d; 12e; 12f) zwischen der Transporteinheit (14a; 14b; 14d; 14e; 14f) und dem Mover (18a; 18b; 18c; 18d; 18e; 18f), **dadurch gekennzeichnet, dass** die Produktaufnahmeeinheit (20a; 20b; 20c; 20d; 20e; 20f), betrachtet in einer zumindest im Wesentlichen senkrecht zu einer Haupterstreckungsebene der Produktaufnahmeeinheit (20a; 20b; 20c; 20d; 20e; 20f) verlaufenden Ebene, zumindest eine zumindest teilweise offene Stirnseite (34a; 34b; 34c; 34d; 34e; 34f) aufweist.

2. Handhabungsvorrichtung nach Anspruch 1, **dadurch gekennzeichnet, dass** die Produktaufnahmeeinheit (20a; 20b; 20c; 20d; 20e; 20f) zumindest einen Boden (36a; 36b; 36c; 36d; 36e; 36f) aufweist, der zumindest eine schlitzartige oder nutartige Aussparung (38a; 38b; 38c; 38d; 38e; 38f) aufweist, die zu einer Einführung zumindest eines Transferelements (40b; 40c; 40d; 40e; 40f) der Transfereinheit (32b; 32c; 32d; 32e; 32f) oder zu einem Beeinflussen einer Reibung zwischen einem in der Produktaufnahmeeinheit (20a) angeordneten Produkt (12a) und dem Boden (36a) der Produktaufnahmeeinheit (20a) vorgesehen ist.

3. Handhabungsvorrichtung nach Anspruch 1 oder 2, **dadurch gekennzeichnet, dass** die Produktaufnahmeeinheit (20a; 20b; 20c; 20d; 20e; 20f) zumindest einen Boden (36a; 36b; 36c; 36d; 36e; 36f) aufweist, der zumindest eine schlitzartige oder nutartige Aussparung (38a; 38b; 38c; 38d; 38e; 38f) aufweist, die sich ausgehend von der zumindest teilweise offenen Stirnseite (34a; 34b; 34c; 34d; 34e; 34f) zumindest zum Großteil über die gesamte Längserstreckung der Produktaufnahmeeinheit (20a; 20b; 20c; 20d; 20e; 20f) erstreckt.

4. Handhabungsvorrichtung nach einem der vorhergehenden Ansprüche, **dadurch gekennzeichnet, dass** die Produktaufnahmeeinheit (20d; 20e; 20f) zumindest ein Rampenelement (42d, 44d; 42e, 44e; 42f, 44f) aufweist, das dazu vorgesehen ist, Produkte (12d; 12e; 12f) geneigt im Produktaufnahmeraum (30d; 30e; 30f) anzuordnen.

5. Handhabungsvorrichtung nach einem der vorhergehenden Ansprüche, **dadurch gekennzeichnet, dass** die Produktaufnahmeeinheit (20d; 20e; 20f) zumindest einen Boden (36d; 36e; 36f), der zumindest eine schlitzartige oder nutartige Aussparung (38d; 38e; 38f) aufweist, und zumindest ein Rampenelement (42d, 44d; 42e, 44e; 42f, 44f) umfasst, das seitlich versetzt zur Aussparung (38d; 38e; 38f) angeordnet ist.

6. Handhabungsvorrichtung nach einem der vorhergehenden Ansprüche, **gekennzeichnet durch** zumindest eine Steuer- oder Regeleinheit (46a; 46b), die zumindest teilweise einstückig mit der Transfereinheit (32a; 32b) ausgebildet ist und die dazu eingerichtet ist, eine Beschleunigungskenngröße des Movers (18a; 18b) derart zu steuern oder zu regeln, dass ein Produkttransfer von Produkten (12a) zwischen der Transporteinheit (14a; 14b) und dem Mover (18a; 18b) in Abhängigkeit von einer Änderung der Beschleunigungskenngröße durchführbar ist.

7. Produktionsmaschine mit zumindest einer Handhabungsvorrichtung nach einem der vorhergehenden Ansprüche.

8. Mover (18a; 18b; 18c; 18d; 18e; 18f) mit einer daran angeordneten Produktaufnahmeeinheit (20a; 20b; 20c; 20d; 20e; 20f) für eine Handhabungsvorrichtung nach einem der Ansprüche 1 bis 6.

9. Verfahren zu einer Übergabe von Produkten (12a; 12d; 12e; 12f), insbesondere von Lebensmitteln, mittels einer Handhabungsvorrichtung nach einem der Ansprüche 1 bis 6, **dadurch gekennzeichnet, dass** zu einem Produkttransfer von zumindest einem Produkt (12a; 12d; 12e; 12f) zwischen der Transporteinheit (14a; 14b; 14d; 14e; 14f) und dem Mover (18a; 18b; 18c; 18d; 18e; 18f), das Produkt (12a; 12d; 12e; 12f) über die offene Stirnseite (34a; 34b; 34c; 34d; 34e; 34f) aus dem Produktaufnahmeraum (30a; 30b; 30c; 30d; 30e; 30f) herausgefördert wird.

10. Verfahren nach Anspruch 9, **dadurch gekennzeichnet, dass** ein Produkttransfer von zumindest einem Produkt (12a; 12d; 12e; 12f) zwischen der Transporteinheit (14a; 14b) und dem Mover (18a; 18b) in Abhängigkeit von einer Änderung einer Beschleunigungskenngröße, insbesondere in Abhängigkeit von einer Verzögerung, des Movers (18a; 18b) durchgeführt wird.

11. Verfahren nach Anspruch 9 oder 10, **dadurch gekennzeichnet, dass** zumindest ein Transferelement (40b; 40c; 40d; 40e; 40f) der Transfereinheit (32b; 32c; 32d; 32e; 32f) zu einem Produkttransfer von zumindest einem Produkt (12d; 12e; 12f) zwischen der Transporteinheit (14b; 14d; 14e; 14f) und dem Mover (18b; 18c; 18d; 18e; 18f) in eine schlitzartige oder nutartige Aussparung (38b; 38c; 38d; 38e; 38f) eines Bodens (36b; 36c; 36d; 36e; 36f) der Produktaufnahmeeinheit (20b; 20c; 20d; 20e; 20f) eingeführt wird.

12. Verfahren nach einem der Ansprüche 9 bis 11, **dadurch gekennzeichnet, dass** der Mover (18b; 18c; 18d; 18e; 18f) zu einem Produkttransfer von zumindest einem Produkt (12d; 12e; 12f) zwischen der Transporteinheit (14b; 14d; 14e; 14f) und dem Mover (18b; 18c; 18d; 18e; 18f) unter zumindest einem Transferelement (40b; 40c; 40d; 40e; 40f) der Transfereinheit (32b; 32c; 32d; 32e; 32f) hindurchfährt.
